# EUROPEAN PATENT SPECIFICATION

(11) **EP 3 587 354 B1**
(45) Date of publication and mention of the grant of the patent: **06.11.2024**
(21) Application number: 18179613.7
(22) Date of filing: 25.06.2018
(51) Int. Cl.: C02F 1/00, C02F 103/00, C02F 1/32, G01F 1/58

(54) **METHOD FOR CONTROLLING BALLAST WATER TREATMENT SYSTEMS**
VERFAHREN FÜR STEUERUNG VON BALLASTWASSERAUFBEREITUNGSANLAGEN
PROCÉDÉ POUR LE CONTRÔL DE SYSTÈMES DE TRAITEMENT DE L'EAU DE BALLAST

(43) Date of publication of application: 01.01.2020
(73) Proprietor: AlfaWall Aktiebolag, 147 80 Tumba (SE)
(72) Inventor: NORDSTRÖM, Peter, SE-183 56 TÄBY (SE); WIKEFELDT, Johan, SE-118 50 STOCKHOLM (SE)
(74) Representative: Alfa Laval Attorneys

(56) References cited:
- WO-A1-2014/091487
- KR-A- 20140 039 642
- US-A1- 2003 051 557
- US-A1- 2015 000 421

## Description

### AREA OF INVENTION

The present invention relates to ballast water treatment systems comprising a ballast water treatment unit for treatment of said untreated ballast water and a method for controlling a ballast water treatment system.

### BACKGROUND OF INVENTION

In order to prevent spreading of nonindigenous biological organisms with the ballast water effective treatment of the ballast water is of extreme importance. Several parameters are of interest for the result of kill, render harmless or making the organisms non-viable, such as the flow rate through the treatment system and the effect of the treatment unit. Ballast water treatment systems have to be able to work under a wide range of challenging environmental conditions, including variable temperature, salinities and suspended particles. They must also function under difficult operational constraints, including high flow-rates of ballast water pumps, large water volumes, and variable retention times (time ballast water is held in tanks). Treatment systems should be capable of kill, render harmless or making non-viable a wide variety of organisms ranging from viruses and microscopic bacteria, to free-swimming plankton, and must operate so as to minimize or prevent impairment of the water quality conditions of the receiving waters.

Conventionally, a ballast water treatment system is provided with a flowmeter in the inlet pipe to supervise the flow of untreated ballast water into the ballast water treatment system. A temperature sensor is often provided in the inlet pipe or in connection of the ballast water treatment unit. Equipment for measuring the salinity is also used. Reasons for measuring salinity may be to treat the water with a certain technology. The salinity value may be used to detect which kind of ballast water treatment technology is suitable to use. For instance is brackish or fresh water a problem for treatment systems using electro chlorination. Solutions comprising filters have problems with fresh water organisms because of clogging. Known methods to measure salinity are the use of a refractometer or a separate conductivity meter. WO2014019487A1 shows an example of a ballast water treatment system in which separate salinity detector and flow meter are used.

US2015/000421 A1 relates to a magnetic-inductive flow meter that can carry out alternatively conductivity measurements and flow measurements on water in a pipe.

### DISCLOSURE OF INVENTION

The object of the present invention is to provide a ballast water treatment system and method for a ballast water treatment system which in a compact and cost-effective manner enables control of the treatment efficiency in different water environments.

The method for control of a ballast water treatment system according to the present invention is defined in the appended claims and, comprises the steps of leading ballast water through a ballast water treatment unit for treating said ballast water at ballasting and/or deballasting and measuring the conductivity of the ballast water by a flow transmitter and calculating a salinity value from said measured conductivity value.

The temperature of the ballast water is measured and the temperature measurement is used to recalculate said conductivity value to a standard temperature and calculating the salinity of said ballast water using said recalculated conductivity value.

The intensity of the treatment in the ballast water is regulated in response to said salinity value.

The regulating is done by regulating the capacity of the ballast water treatment unit.

The regulating is done by regulating the flow of said ballast water.

The ballast water is led through said flow transmitter before said ballast water treatment unit

The intensity of the treatment in the ballast water treatment unit is regulated in fresh, brackish or salt water in response to said salinity value.

The intensity of the treatment in the ballast water treatment unit is regulated continuously in response to said salinity value.

The ballast water treatment system comprises a ballast water treatment unit for treating ballast water. The ballast water treatment system further comprises a flow transmitter measuring the conductivity of said ballast water, and a programmable logic controller (PLC) using said conductivity value for calculating the salinity of said ballast water.

Said flow transmitter is arranged in an inlet pipe leading said ballast water to said ballast water treatment unit.

Said ballast water system further comprises a temperature sensor measuring the temperature of said ballast water, and said programmable logic controller (PLC) is using said temperature measurement for recalculating said conductivity value to a standard temperature for calculating the salinity of said ballast water.

The temperature sensor may be arranged in said inlet pipe or in said ballast water treatment unit.

A regulating device is configured to regulate the intensity of the treatment of the ballast water in response to said salinity value.

Said regulating device is configured to regulate the capacity of the ballast water treatment unit.

Said regulating device is configured to regulate the flow of the ballast water by regulating a ballast pump in said inlet pipe.

Said temperature sensor is arranged in said inlet pipe.

Said temperature sensor is arranged in said ballast water treatment unit.

The temperature sensor is arranged in said flow transmitter.

Further aspects of the invention are apparent from the dependent claims and the description.

### BRIEF DESCRIPTION OF THE DRAWINGS

Further objects, features and advantages will appear from the following detailed description of several embodiments of the invention with reference to the drawings, in which:

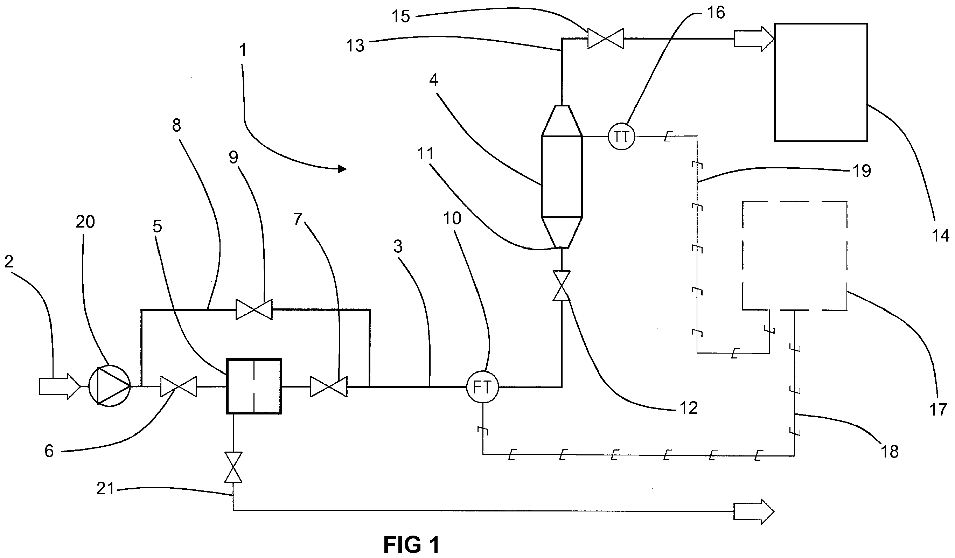

Fig. 1 is a schematic view of an embodiment of a ballast water treatment system according to the invention.

### DETAILED DESCRIPTION OF EMBODIMENTS

In Fig. 1 is a ballast water treatment system 1 comprising an intake 2 of untreated ballast water. An inlet pipe 3 is with a first end connected to said intake 2 leading the untreated ballast water to a ballast water treatment unit 4. The ballast water treatment unit 4 in fig. 1 is a UV-lamp chamber treating the ballast water with UV-light. In other embodiments the ballast water treatment unit may comprise several such units or may be based on filtration, chemical treatment, other types of physical treatment such as gas injection, cavitation or ultrasonic treatment or combinations of such treatments.

In said inlet pipe 3 is a filter 5 arranged adapted to filter the untreated ballast water removing larger particles and organisms. Before and after said filter 5 in the inlet pipe 3 are first and second cut-off valves 6, 7 arranged. A by-pass pipe 8 is connected to said inlet pipe 3 with its first end before said first cut-off valve 6 arranged before said filter 5 and with its second end after said second cut-off valve 7 arranged after said filter 5. When service of the filter 5 is needed the cut-off valves 6, 7 are closed. A third cut-off valve 9 is arranged in said by-pass pipe 8 and when closed preventing the ballast water to by-pass the filter 5. The filter reject is removed by a reject pipe 21.

In the inlet pipe 3 a flow transmitter 10 is arranged. In fig. 1 the flow transmitter 10 is a magnetic inductive flowmeter that operates according to Faraday's law of electromagnetic induction. It consists of a metering pipe and magnetic coils. When a current is applied to the coils, a magnetic field is produced at right angles to the metering pipe. When a conductor, in this case the ballast water, is streaming in the pipe, i.e. the magnetic field, a voltage is induced. Two electrodes that are in contact with the conductive fluid are arranged so that the space between them is filled with said fluid creating a conductor. The voltage between the electrodes is detected and is proportional to the flow velocity according to the equation U = kBVD where
- U =: induced voltage
- k =: instrument constant
- B =: magnetic field strength
- V =: velocity of the conductor
- D =: conductor width
and thus accurately reflects the volume of the liquid flowing through the pipe.

The inlet pipe 3 is with its second end connected to the ballast water treatment unit 4, where the ballast water is subjected to treatment in order to immobilize the nonindigenous biological organisms therein. In the inlet pipe 3 just before an inlet 11 of the ballast water treatment unit 4 is a fourth cut-off valve 12 arranged. From the ballast water treatment unit 4 an outlet pipe 13 is arranged leading the treated ballast water to a ballast tank 14. In the outlet pipe 13 a fifth cut-off valve 15 is arranged.

The voltage (flow) signal from the flow transmitter 10 is transferred to a programmable logic controller (PLC) 17 via a first signal line 18 where it may be used for control of different components of the system, e.g. a ballast pump 20 in said input pipe 3and or valves etc. The voltage signal corresponds at the same time to a conductivity value which may be used for further purposes. The conductivity value is for instance in the present invention used for determining the salinity of the ballast water streaming through said flow transmitter 10. To determine the salinity even more accurately, a measurement of the temperature of the ballast water may be performed since the conductivity is dependent on the temperature as of c. 2 % per degree Celsius.

A temperature sensor 16 is therefore arranged in the ballast water treatment unit 4 where it gives a good enough estimate of the temperature of the ballast water. Alternatively, the temperature sensor 16 may be arranged in the inlet pipe 3 or even be incorporated in the flow transmitter 10. The temperature sensor 16 is also connected via a second signal line 19 to the programmable logic controller (PLC) 17 where to its signal is transferred. The salinity value from the flow transmitter 10 and where the salinity value is computed also using the conductivity value from the flow transmitter 10.

The flow transmitter 10 may be placed in other places than the one described in the embodiment of fig. 1. One such place is after the ballast water treatment unit 4 but before the cut-off valve 15. Another is in the inlet pipe before cut-off valve 6.

The invention is not limited to the embodiments described above and shown on the drawings, but can be supplemented and modified in any manner within the scope of the invention as defined by the enclosed claims.

## Claims

1. Method for controlling a ballast water treatment system (1), the system (1) comprising a flow transmitter that is a magnetic inductive flowmeter (10) being configured to detect voltage between two electrodes in contact with the ballast water as a conductive fluid, the voltage corresponding to the conductivity value and being proportional to the flow velocity, and a programmable logic controller (PLC) (17) for controlling the method, the method comprising the steps of leading ballast water through a ballast water treatment unit (4) for treating said ballast water in order to kill, render harmless or making non-viable organisms in said ballast water at ballasting and/or deballasting, and wherein the method comprises further steps of leading the ballast water through the flow transmitter (10) before said ballast water treatment unit, measuring the conductivity of the ballast water by the flow transmitter (10), calculating a salinity value from said measured conductivity value, and regulating the intensity of the treatment of the ballast water in response to said salinity value.

2. Method according to claim 1, further comprising the steps of measuring the temperature of the ballast water and using said temperature measurement to recalculate said conductivity value to a standard temperature and calculating the salinity of said ballast water using said recalculated conductivity value.

3. Method according to any one of claims 1 or 2, wherein said regulating is done by regulating the capacity of the ballast water treatment unit (4).

4. Method according to any one of claims 1 or 2, wherein said regulating is done by regulating the flow of said ballast water.

5. Method according to any one of the preceding claims, wherein the detected voltage between the electrodes is proportional to the flow velocity according to the equation U = kBVD, where
U = induced voltage
k = instrument constant
B = magnetic field strength
V = velocity of the conductor
D = conductor width

6. Method according to any one of claims 1 - 5, wherein the intensity is regulated in fresh, brackish or salt water in response to said salinity value.

7. Method according to any one of claims 1 - 5, wherein the intensity is regulated continuously in response to said salinity value.

8. Ballast water treatment system (1), comprising a ballast water treatment unit (4) for treating ballast water, a flow transmitter that is a magnetic inductive flowmeter (10) and a programmable logic controller (PLC) (17), wherein said flow transmitter (10) is arranged in an inlet pipe (3) leading said ballast water to said ballast water treatment unit (4) and is configured to measure the conductivity of said ballast water by detecting voltage between two electrodes in contact with a conductive fluid, the voltage corresponding to the conductivity value and being proportional to the flow velocity, the programmable logic controller (PLC) (17) being configured to calculate a salinity value of said ballast water based on said conductivity value, and a regulating device being configured to regulate the intensity of the treatment of the ballast water in response to said salinity value.

9. Ballast water treatment system of claim 8, wherein the detected voltage between the electrodes is proportional to the flow velocity according to the equation U = kBVD, where
U = induced voltage
k = instrument constant
B = magnetic field strength
V = velocity of the conductor
D = conductor width

10. Ballast water treatment system, according to any one of claims 8 to 9, wherein said ballast water system (1) further comprises a temperature sensor (16) measuring the temperature of said ballast water, and wherein said programmable logic controller (PLC) (17) is using said temperature measurement for recalculating said conductivity value to a standard temperature for calculating the salinity of said ballast water.

11. Ballast water treatment system, according to any one of claims 8-10, wherein said regulating device is configured to regulate the capacity of the ballast water treatment unit (4).

12. Ballast water treatment system, according to any one of claims 8-10, wherein said regulating device is configured to regulate the flow of the ballast water by regulating a ballast pump in said inlet pipe (3).

13. Ballast water treatment system, according to claim 10, wherein said temperature sensor (16) is arranged in said inlet pipe (3).

14. Ballast water treatment system, according to claim 10, wherein said temperature sensor (16) is arranged in said ballast water treatment unit (4).

15. Ballast water treatment system, according to claim 10, wherein said temperature sensor (16) is arranged in said flow transmitter (10).

## Patentansprüche

1. Verfahren zum Steuern eines Ballastwasseraufbereitungssystems (1), wobei das System (1) einen Durchflussgeber, der ein magnetisch-induktiver Durchflussmesser (10) ist, der dazu konfiguriert ist, eine Spannung zwischen zwei Elektroden in Kontakt mit dem Ballastwasser als ein leitfähiges Fluid zu erfassen, wobei die Spannung dem Leitfähigkeitswert entspricht und proportional zu der Durchflussgeschwindigkeit ist, und eine programmierbare logische Steuerung (PLC) (17) zum Steuern des Verfahrens umfasst, wobei das Verfahren die Schritte des Führens von Ballastwasser durch eine Ballastwasseraufbereitungseinheit (4) zum Aufbereiten des Ballastwassers, um Organismen in dem Ballastwasser beim Beladen mit Ballastwasser und/oder Lenzen abzutöten, unschädlich zu machen oder nicht lebensfähig zu machen, umfasst, und wobei das Verfahren ferner Schritte des Führens des Ballastwassers durch den Durchflussgeber (10) vor der Ballastwasseraufbereitungseinheit, des Messens der Leitfähigkeit des Ballastwassers durch den Durchflussgeber (10), des Berechnens eines Salzgehaltwerts aus dem gemessenen Leitfähigkeitswert, und des Regulierens der Intensität der Aufbereitung des Ballastwassers als Reaktion auf den Salzgehaltwert umfasst.

2. Verfahren nach Anspruch 1, ferner umfassend die Schritte des Messens der Temperatur des Ballastwassers und des Verwendens des Temperaturmesswerts, um den Leitfähigkeitswert zu einer Standardtemperatur neu zu berechnen, und des Berechnens des Salzgehalts des Ballastwassers unter Verwendung des neu berechneten Leitfähigkeitswerts.

3. Verfahren nach einem der Ansprüche 1 oder 2, wobei das Regulieren durch Regulieren der Kapazität der Ballastwasseraufbereitungseinheit (4) vorgenommen wird.

4. Verfahren nach einem der Ansprüche 1 oder 2, wobei das Regulieren durch Regulieren des Durchflusses des Ballastwassers vorgenommen wird.

5. Verfahren nach einem der vorhergehenden Ansprüche, wobei die erfasste Spannung zwischen den Elektroden proportional zu der Durchflussgeschwindigkeit gemäß der Gleichung U = kBVD ist, worin
U = induzierte Spannung,
k = Instrumentenkonstante,
B = Magnetfeldstärke,
V = Geschwindigkeit des Leiters,
D = Leiterbreite.

6. Verfahren nach einem der Ansprüche 1 bis 5, wobei die Intensität in Süß-, Brack- oder Salzwasser als Reaktion auf den Salzgehaltwert reguliert wird.

7. Verfahren nach einem der Ansprüche 1 bis 5, wobei die Intensität kontinuierlich als Reaktion auf den Salzgehaltwert reguliert wird.

8. Ballastwasseraufbereitungssystem (1), umfassend eine Ballastwasseraufbereitungseinheit (4) zum Aufbereiten von Ballastwasser, einen Durchflussgeber, der ein magnetisch-induktiver Durchflussmesser (10) ist, und eine programmierbare logische Steuerung (PLC) (17), wobei der Durchflussgeber (10) in einem Einlassrohr (3), das das Ballastwasser zu der Ballastwasseraufbereitungseinheit (4) führt, angeordnet ist und dazu konfiguriert ist, die Leitfähigkeit des Ballastwassers durch Erfassen einer Spannung zwischen zwei Elektroden in Kontakt mit einem leitfähigen Fluid zu messen, wobei die Spannung dem Leitfähigkeitswert entspricht und proportional zu der Durchflussgeschwindigkeit ist, wobei die programmierbare logische Steuerung (PLC) (17) dazu konfiguriert ist, einen Salzgehaltwert des Ballastwassers auf der Basis des Leitfähigkeitswerts zu berechnen, und eine Reguliervorrichtung dazu konfiguriert ist, die Intensität der Aufbereitung des Ballastwassers als Reaktion auf den Salzgehaltwert zu regulieren.

9. Ballastwasseraufbereitungssystem nach Anspruch 8, wobei die erfasste Spannung zwischen den Elektroden proportional zu der Durchflussgeschwindigkeit gemäß der Gleichung U = kBVD ist, worin
U = induzierte Spannung
k = Instrumentenkonstante
B = Magnetfeldstärke
V = Geschwindigkeit des Leiters
D = Leiterbreite.

10. Ballastwasseraufbereitungssystem nach einem der Ansprüche 8 bis 9, wobei das Ballastwassersystem (1) ferner einen Temperatursensor (16) umfasst, der die Temperatur des Ballastwassers misst, und wobei die programmierbare logische Steuerung (PLC) (17) den Temperaturmesswert zum Neuberechnen des Leitfähigkeitswerts zu einer Standardtemperatur zum Berechnen des Salzgehalts des Ballastwassers verwendet.

11. Ballastwasseraufbereitungssystem nach einem der Ansprüche 8 bis 10, wobei die Reguliervorrichtung dazu konfiguriert ist, die Kapazität der Ballastwasseraufbereitungseinheit (4) zu regulieren.

12. Ballastwasseraufbereitungssystem nach einem der Ansprüche 8 bis 10, wobei die Reguliervorrichtung dazu konfiguriert ist, den Durchfluss des Ballastwassers durch Regulieren einer Ballastpumpe in dem Einlassrohr (3) zu regulieren.

13. Ballastwasseraufbereitungssystem nach Anspruch 10, wobei der Temperatursensor (16) in dem Einlassrohr (3) angeordnet ist.

14. Ballastwasseraufbereitungssystem nach Anspruch 10, wobei der Temperatursensor (16) in der Ballastwasseraufbereitungseinheit (4) angeordnet ist.

15. Ballastwasseraufbereitungssystem nach Anspruch 10, wobei der Temperatursensor (16) in dem Durchflussgeber (10) angeordnet ist.

## Revendications

1. Procédé de commande d'un système de traitement des eaux de ballast (1), le système (1) comprenant un transmetteur de débit qui est un débitmètre à induction magnétique (10) configuré pour détecter une tension entre deux électrodes en contact avec les eaux de ballast à titre de fluide conducteur, la tension correspondant à la valeur de conductivité et étant proportionnelle à la vitesse d'écoulement, et un automate programmable (PLC) (17) pour commander le procédé, le procédé comprenant les étapes de guidage des eaux de ballast à travers une unité de traitement des eaux de ballast (4) pour traiter lesdites eaux de ballast pour tuer, rendre inoffensifs ou rendre non viables des organismes dans lesdites eaux de ballast au moment du ballastage et/ou du déballastage, et dans lequel le procédé comprend en outre des étapes de guidage des eaux de ballast à travers le transmetteur de débit (10) avant ladite unité de traitement des eaux de ballast, de mesure de la conductivité des eaux de ballast par le transmetteur de débit (10), de calcul d'une valeur de salinité à partir de ladite valeur de conductivité mesurée, et de régulation de l'intensité du traitement des eaux de ballast en réponse à ladite valeur de salinité.

2. Procédé selon la revendication 1, comprenant en outre les étapes de mesure de la température des eaux de ballast et d'utilisation de ladite mesure de température pour recalculer ladite valeur de conductivité à une température standard et de calcul de la salinité desdites eaux de ballast à l'aide de ladite valeur de conductivité recalculée.

3. Procédé selon l'une quelconque des revendications 1 ou 2, dans lequel ladite régulation est effectuée en régulant la capacité de l'unité de traitement des eaux de ballast (4).

4. Procédé selon l'une quelconque des revendications 1 ou 2, dans lequel ladite régulation est effectuée en régulant le débit desdites eaux de ballast.

5. Procédé selon l'une quelconque des revendications précédentes, dans lequel la tension détectée entre les électrodes est proportionnelle à la vitesse d'écoulement selon l'équation U = kBVD, où
U = tension induite,
k = constante d'instrument,
B = intensité de champ magnétique,
V = vitesse du conducteur,
D = largeur de conducteur.

6. Procédé selon l'une quelconque des revendications 1 à 5, dans lequel l'intensité est régulée en eau douce, saumâtre ou salée en réponse à ladite valeur de salinité.

7. Procédé selon l'une quelconque des revendications 1 à 5, dans lequel l'intensité est régulée en continu en réponse à ladite valeur de salinité.

8. Système de traitement des eaux de ballast (1) comprenant une unité de traitement des eaux de ballast (4) pour traiter des eaux de ballast, un transmetteur de débit qui est un débitmètre à induction magnétique (10) et un automate programmable (PLC) (17), dans lequel ledit transmetteur de débit (10) est disposé dans un conduit d'entrée (3) amenant lesdites eaux de ballast jusqu'à ladite unité de traitement des eaux de ballast (4) et est configuré pour mesurer la conductivité desdites eaux de ballast en détectant une tension entre deux électrodes en contact avec un fluide conducteur, la tension correspondant à la valeur de conductivité et étant proportionnelle à la vitesse d'écoulement, l'automate programmable (PLC) (17) étant configuré pour calculer une valeur de salinité desdites eaux de ballast sur la base de ladite valeur de conductivité, et un dispositif de régulation étant configuré pour réguler l'intensité du traitement des eaux de ballast en réponse à ladite valeur de salinité.

9. Système de traitement des eaux de ballast selon la revendication 8, dans lequel la tension détectée entre les électrodes est proportionnelle à la vitesse d'écoulement selon l'équation U = kBVD, où
U = tension induite,
k = constante d'instrument,
B = intensité de champ magnétique,
V = vitesse du conducteur
D = largeur de conducteur.

10. Système de traitement des eaux de ballast selon l'une quelconque des revendications 8 à 9, dans lequel ledit système des eaux de ballast (1) comprend en outre un capteur de température (16) mesurant la température desdites eaux de ballast, et dans lequel ledit automate programmable (PLC) (17) utilise ladite mesure de température pour recalculer ladite valeur de conductivité à une température standard pour calculer la salinité desdites eaux de ballast.

11. Système de traitement des eaux de ballast selon l'une quelconque des revendications 8 à 10, dans lequel ledit dispositif de régulation est configuré pour réguler la capacité de l'unité de traitement des eaux de ballast (4).

12. Système de traitement des eaux de ballast selon l'une quelconque des revendications 8 à 10, dans lequel ledit dispositif de régulation est configuré pour réguler le débit des eaux de ballast en régulant une pompe de ballast dans ledit conduit d'entrée (3).

13. Système de traitement des eaux de ballast selon la revendication 10, dans lequel ledit capteur de température (16) est disposé dans ledit conduit d'entrée (3).

14. Système de traitement des eaux de ballast selon la revendication 10, dans lequel ledit capteur de température (16) est disposé dans ladite unité de traitement des eaux de ballast (4).

15. Système de traitement des eaux de ballast selon la revendication 10, dans lequel ledit capteur de température (16) est disposé dans ledit transmetteur de débit (10).
